# EUROPEAN PATENT APPLICATION

(11) **EP 2 202 895 A2**
(43) Date of publication of application: **30.06.2010**
(21) Application number: 09178657.4
(22) Date of filing: 10.12.2009
(51) Int. Cl.: H04B 7/155

(54) **Radio relay station apparatus and radio relay method**

(30) Priority: 25.12.2008 JP 2008331008
(71) Applicant: FUJITSU LIMITED, Kawasaki-shi, Kanagawa 211-8588 (JP)
(72) Inventor: Tsutsui, Masafumi, Kawasaki-shi Kanagawa 211-8588 (JP)
(74) Representative: Lewin, David Nicholas

(57) **Abstract**

Relaying a radio signal in a radio relay station apparatus that relays the radio signal between a base station apparatus and a mobile station apparatus, including storing an identifier of the mobile station apparatus, specifying a radio resource assigned to the mobile station apparatus, which is a radio resource in which a radio signal that should be amplified is transmitted, the radio resource assigned to the mobile station apparatus being indicated by control channel information sent from the base station apparatus, and receiving the radio signal between the base station apparatus and the mobile station apparatus. Further including amplifying the received signal, the received signal being transmitted on the specified radio resource, and sending the amplified signal in a form of the radio signal.

## Description

### FIELD

The present invention relates to a radio relay station apparatus and a radio relay method for receiving a radio signal, which is transmitted and received between a base station apparatus and a mobile station apparatus, and sending the radio signal after amplifying the radio signal.

### BACKGROUND

A radio frequency (RF) direct amplification method that is of a non-regenerative relay method and a baseband regenerative relay method are known as a method for relaying the radio signal. In the RF direct amplification method, the received radio signal is amplified without regeneration. In the baseband regenerative relay method, the received signal is returned to a baseband signal by demodulation and decoding, and coding and modulation are performed after the original signal is regenerated by correcting errors and the like.

There is a known technique, in which a sub-carrier having receiving quality lower than a specified level is selected and amplified, based on channel information supplied from the base station, and the sub-carrier is relayed and sent as a multi-carrier signal for the mobile station apparatus.

There is also a known technique, in which a Transmission and Multiplexing Configuration Control (TMCC) signal is demodulated to check whether a layer to be sent again is included in a received digital broadcast signal and an output from a bandpass filter is directly output to an amplifying unit (for example, see International Publication Pamphlet No. WO 2006/035902 and Japanese Laid-Open Patent Publication No. 2005-341195).

The RF direct amplification method is a simple configuration which results in minimal processing delay. However, in the RF direct amplification method, power consumption in the relay is increased because unnecessary signals that are not the relay target are also amplified. Also, in the RF direct amplification method, a frequency band occupancy in the relay is less efficient because the unnecessary signals that are not the relay target are also amplified.

Communication quality is improved in the baseband regenerative relay method. However, in the baseband regenerative relay method, processing delay is generated because of demodulation processing, decoding processing, baseband signal processing, coding processing, and modulation processing.

It is desirable to provide a radio relay station apparatus and a radio signal relay method, in which the processing delay is decreased to reduce the power consumption. It is also desirable to provide a radio relay station apparatus and a radio signal relay method, in which the processing delay is decreased to improve the frequency use efficiency.

### SUMMARY

According to an aspect of the invention, a radio relay method for relaying a radio signal in a radio relay station apparatus that relays the radio signal between a base station apparatus and a mobile station apparatus, the radio relay method includes storing an identification of the mobile station apparatus, specifying a radio resource assigned to the mobile station apparatus, which is a radio resource in which a radio signal that should be amplified is transmitted, the radio resource assigned to the mobile station apparatus being indicated by control channel information sent from the base station apparatus, and receiving the radio signal between the base station apparatus and the mobile station apparatus. The radio relay method also includes amplifying the received signal, the received signal being transmitted on the specified radio resource, and sending the amplified signal in a form of the radio signal.
Advantages of the invention may be realized and attained by means of the elements and combinations particularly pointed out in the claims.
It is to be understood that both the foregoing general description and the following detailed description are exemplary and explanatory and are not restrictive of the invention, as claimed.

### BRIEF DESCRIPTION OF THE DRAWINGS

FIG. 1 is an overall view illustrating a configuration of a radio relay station apparatus according to a first embodiment of the invention;
FIG. 2 illustrates an example of a configuration of an identification information registering unit of FIG. 1;
FIG. 3 illustrates an example of a configuration of a radio resource specifying unit of FIG. 1;
FIG. 4 illustrates an example of a frame format of a radio signal;
FIG. 5 illustrates an example of a configuration of an amplifying unit of FIG. 1;
FIG. 6 is a flowchart illustrating an operation of the radio relay station apparatus of FIG. 1;
FIG. 7 is an overall view illustrating a configuration of a radio relay station apparatus according to a second embodiment of the invention;
FIG. 8 illustrates an example of a configuration of a radio resource specifying unit of FIG. 7;
FIG. 9 is a flowchart illustrating an operation of the radio relay station apparatus of FIG. 7;
FIG. 10 is an overall view illustrating a configuration of a radio relay station apparatus according to a third embodiment of the invention;
FIG. 11 is an overall view illustrating a configuration of a radio relay station apparatus according to a fourth embodiment of the invention;
FIG. 12 is an overall view illustrating a configuration of a radio relay station apparatus according to a fifth embodiment of the invention;
FIG. 13 illustrates an example of a configuration of an amplifying unit of FIG. 12;
FIG. 14 is an overall view illustrating a configuration of a radio relay station apparatus according to a sixth embodiment of the invention;
FIG. 15 illustrates an example of a configuration of a radio resource specifying unit of FIG. 14;
FIG. 16 illustrates an example of a configuration of a random access response message receiving processing unit of FIG. 14;
FIG. 17 illustrates an example of a configuration of a random access message receiving processing unit of FIG. 14;
FIG. 18 illustrates an example of a configuration of an identification information registering unit of FIG. 14;
FIG. 19 is a flowchart illustrating an example of a process for a mobile station apparatus to obtain identification information; and
FIG. 20 illustrates an example a process for the mobile station apparatus to obtain identification information.

### DESCRIPTION OF PREFERRED EMBODIMENTS

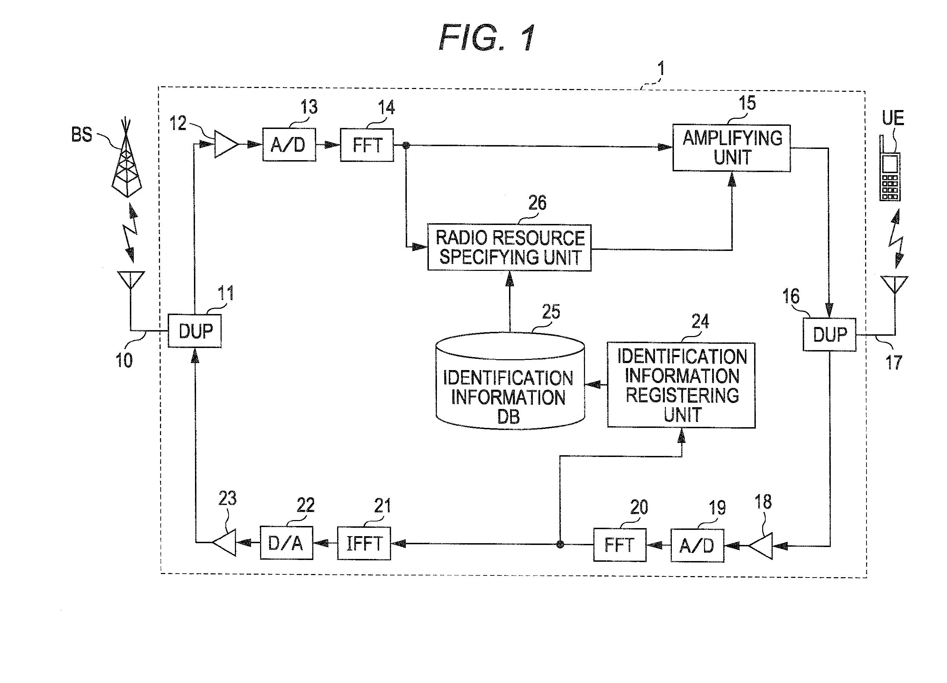

Preferred embodiments of the invention will be described below with reference to the accompanying drawings. FIG. 1 is an overall view illustrating a configuration of a radio relay station apparatus according to a first embodiment of the invention. A radio relay station apparatus 1 relays a radio signal that is sent from a base station apparatus (BS) to a mobile station apparatus (hereinafter also referred to as user equipment (UE)) on a downlink. That is, the radio relay station apparatus 1 receives the radio signal sent from the base station apparatus (BS) to the mobile station apparatus (UE), and sends the radio signal to the mobile station apparatus (UE) after amplifying the radio signal. The radio relay station apparatus 1 relays the radio signal sent from the mobile station apparatus (UE) to the base station apparatus (BS) on an uplink. That is, the radio relay station apparatus 1 receives the radio signal sent from the mobile station apparatus (UE) to the base station apparatus (BS), and sends the radio signal to the base station apparatus (BS) after amplifying the radio signal.

The radio relay station apparatus 1 includes antennas 10 and 17, duplexers (DUP) 11 and 16, linear amplifiers 12 and 18, analog-digital conversion units (A/D) 13 and 19, Fourier transform units (FFT) 14 and 20, an inverse Fourier transform unit (IFFT) 21, a digital-analog conversion unit (D/A) 22, and a power amplifier 23. The radio relay station apparatus 1 also includes an amplifying unit 15, an identification information registering unit 24, an identification information database 25, and a radio resource specifying unit 26.

In the following embodiments, for example, the mobile station apparatus (UE) is connected to the base station apparatus (BS) by Orthogonal Frequency Division Multiple Access (OFDMA). For example, the mobile station apparatus (UE) and the base station apparatus (BS) may be communicating pursuant to a communication standard defined by Long Term Evolution (LTE) that is being standardized in the 3rd Generation Partnership Project (3GPP). However, the radio relay station apparatus of the embodiments is not limited to that used in a communication system that is pursuant to LTE, but the radio relay station apparatus in the embodiments can be applied to various communication systems in which, using a control signal, the base station apparatus (BS) notifies the mobile station apparatus (UE) of a radio resource assigned to the mobile station apparatus (UE) on the uplink and/or the downlink.

In the radio relay station apparatus 1, the antenna 10 receives the radio signal sent from the base station apparatus (BS) to the mobile station apparatus (UE) on the downlink. The linear amplifier 12 amplifies the received signal input through the duplexer 11. The analog-digital conversion unit 13 converts the signal amplified by the linear amplifier 12 into a digital signal. The Fourier transform unit 14 performs Fourier transform of an OFDMA signal converted into the digital signal by the analog-digital conversion unit 13, thereby converting the OFDMA signal into a symbol of each sub-carrier.

The amplifying unit 15 converts the symbol of each sub-carrier, output from the Fourier transform unit 14, into the OFDMA signal by inverse Fourier transform. The amplifying unit 15 amplifies the OFDMA signal. A configuration of the amplifying unit 15 is described later. The antenna 17 sends the OFDMA signal, supplied through the duplexer 16 and amplified by the amplifying unit 15, to the mobile station apparatus (UE) .

In the radio relay station apparatus 1, the antenna 17 receives the radio signal sent from the mobile station apparatus (UE) to the base station apparatus (BS) on the uplink. The linear amplifier 18 amplifies the received signal input through the duplexer 16. The analog-digital conversion unit 19 converts the signal amplified by the linear amplifier 18 into the digital signal. The Fourier transform unit 20 performs the Fourier transform of the OFDMA signal converted into the digital signal by the analog-digital conversion unit 19, thereby converting the OFDMA signal into the symbol of each sub-carrier.

The inverse Fourier transform unit 21 converts the symbol of each sub-carrier, output from the Fourier transform unit 20, into the OFDMA signal by the inverse Fourier transform. The digital-analog conversion unit 22 converts the OFDMA signal output from the inverse Fourier transform unit 21 into the analog signal. The power amplifier 23 amplifies the analog-format OFDMA signal converted by the digital-analog conversion unit 22. The antenna 10 sends the OFDMA signal, supplied through the duplexer 11 and amplified by the power amplifier 23, to the base station apparatus (BS). In each embodiment, the OFDMA signal is used by way of example. However, there is substantially no difference from a Single Carrier Frequency Division Multiple Access (SC-FDMA) signal that is used in an uplink communication method pursuant to LTE.

When the mobile station apparatus (UE) notifies the base station apparatus (BS) on the uplink of identification information on the mobile station apparatus (UE), the identification information registering unit 24 obtains the identification information on the mobile station apparatus (UE), which is transmitted on the uplink. The identification information registering unit 24 registers the obtained identification information in the identification information database (DB) 25.

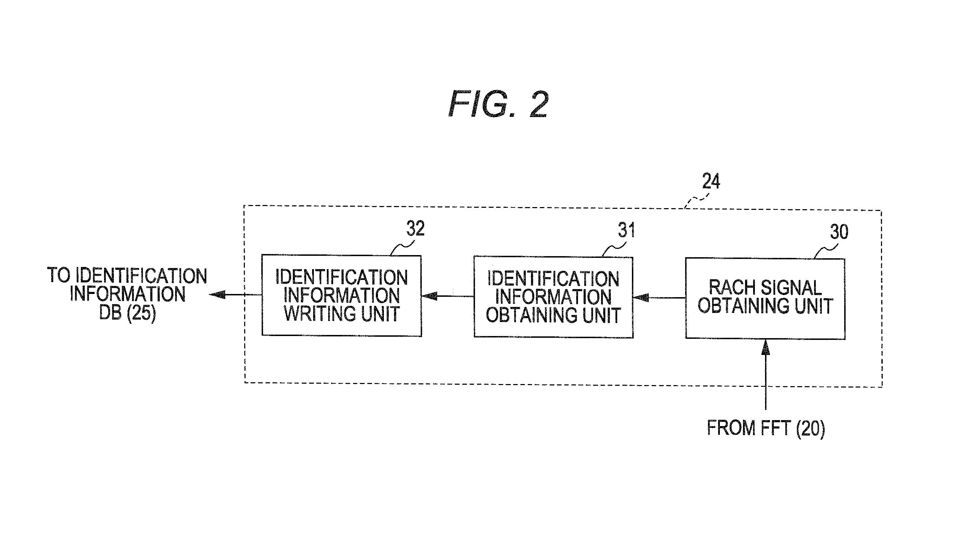

For example, in the communication standard defined by LTE, the mobile station apparatus (UE) notifies the base station apparatus (BS) of the identification information on the mobile station apparatus (UE) through a random access channel (RACH) on the uplink. FIG. 2 illustrates an example of a configuration of the identification information registering unit 24 of FIG. 1.

The identification information registering unit 24 includes an RANCH signal obtaining unit 30, an identification information obtaining unit 31, and an identification information writing unit 32. The RACH signal obtaining unit 30 obtains an RACH signal, transmitted through the random access channel, from a signal received from the mobile station apparatus (UE) on the uplink. The identification information obtaining unit 31 obtains the identification information on the mobile station apparatus (UE) of a source host. The identification information on the mobile station apparatus (UE) of the source host is included in the RACH signal obtained by the RANCH signal obtaining unit 30. The identification information writing unit 32 writes the identification information obtained by the identification information obtaining unit 31 in the identification information database 25 as the identification information on the mobile station apparatus that relays communication with the base station apparatus (BS) through the radio relay station apparatus 1.

The identification information registering unit 24 registers the mobile station apparatus (UE) located within a range capable of communicating with the radio relay station apparatus 1 in the identification information database 25 as the mobile station apparatus (UE) whose communication with the base station apparatus (BS) is relayed by the radio relay station apparatus 1.

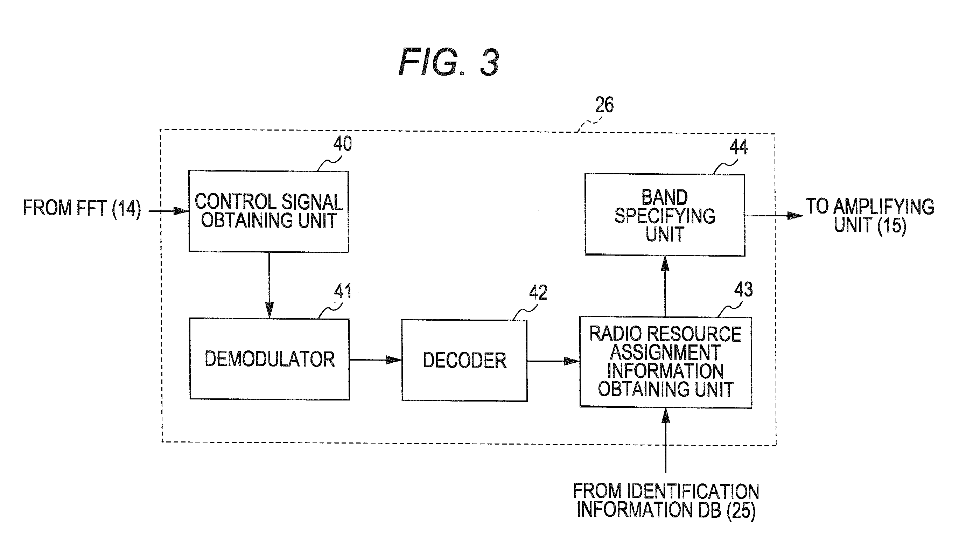

Referring again to FIG. 1, the radio resource specifying unit 26 specifies a radio resource used in the transmission of the signal that should be amplified by the radio relay station apparatus 1 in the OFDMA signal received from the base station apparatus (BS). FIG. 3 illustrates an example of a configuration of the radio resource specifying unit 26 of FIG. 1. The radio resource specifying unit 26 includes a control signal obtaining unit 40, a demodulator 41, a decoder 42, a radio resource assignment information obtaining unit 43, and a band specifying unit 44.

The control signal obtaining unit 40 obtains a control signal sent from the base station apparatus (BS) to the mobile station apparatus (UE) on the downlink. The demodulator 41 demodulates the control signal obtained from the control signal obtaining unit 40, and the decoder 42 decodes the control signal.

The radio resource assignment information obtaining unit 43 obtains identification information on each mobile station apparatus (UE) connected to the base station apparatus (BS) and radio resource assignment information for providing an instruction of a frequency band assigned on the downlink to each mobile station apparatus (UE) from the decoded control signal. The radio resource assignment information obtaining unit 43 reads the identification information on the mobile station apparatus (UE), which is registered as the mobile station apparatus relayed by the radio relay station apparatus 1 from the identification information baseband 25. The radio resource assignment information obtaining unit 43 compares the identification information included in the decoded control signal and the identification information on the mobile station apparatus (UE) registered in the identification information database 25. The radio resource assignment information obtaining unit 43 obtains the radio resource assignment information that is stored in control information while correlated with the identification information, when the identification information included in the control signal is matched with the identification information registered in the identification information database 25. The radio resource assignment information obtaining unit 43 identifies the frequency band assigned to the mobile station apparatus (UE) registered in the identification information database 25 according to the radio resource assignment information.

In a period during which the identification information is sent on the downlink, the band specifying unit 44 specifies the frequency band used in the transmission of the identification information as the frequency band that should be amplified by the amplifying unit 15. In a period during which the data is sent on the downlink in the frequency band assigned to each mobile station apparatus (UE), the band specifying unit 44 specifies the frequency band identified by the radio resource assignment information obtaining unit 43 as the frequency band that should be amplified by the amplifying unit 15.

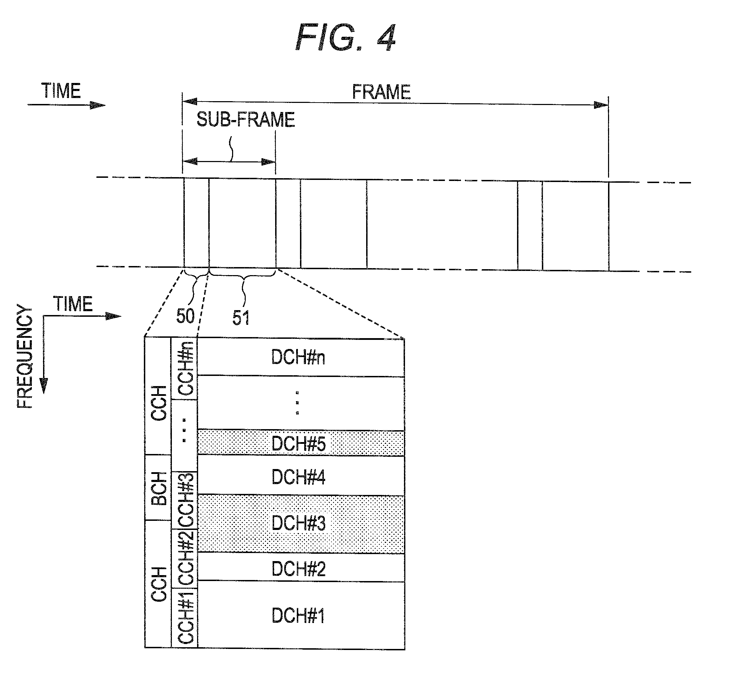

FIG. 4 illustrates an example of a frame format of the radio signal. The frame format expresses a frame format of the radio signal on the downlink defined by LTE. One frame includes plural sub-frames, and one sub-frame includes a control signal portion 50 and a data portion 51.

A control channel is mapped in the control signal portion 50. The control channel includes a broadcast channel (BCH) through which broadcast information is transmitted, a common control channel (CCH) through which control information shared by each mobile station apparatus (UE) is transmitted, and a dedicated control channel (CCH#1 to CCH#n) through which control information on each of mobile station apparatuses #1 to #n is transmitted. The common control channel CCH includes the identification information on the mobile station apparatus (UE), in which the sending data is included in the data portion 51 of the sub-frame. The dedicated control channels CCH#1 to CCH#n respectively include pieces of information for indicating the frequency bands assigned to the mobile station apparatuses #1 to #n whose pieces of identification information are specified in the common control channel CCH. Data channels (DCH#1 to DCH#n) assigned to the mobile station apparatuses #1 to #n, respectively, are mapped in the data portion 51.

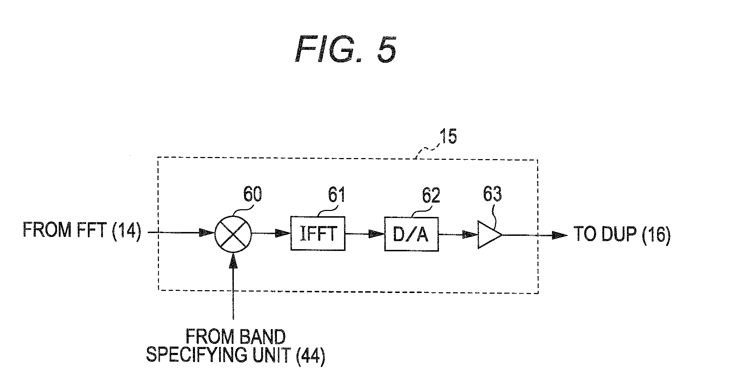

FIG. 5 illustrates an example of a configuration of the amplifying unit 15 of FIG. 1. The amplifying unit 15 amplifies the signal in the frequency band specified by the band specifying unit 44 in the OFDMA signal that is converted into the signal expressing the symbol of each sub-carrier by the Fourier transform unit 14. The amplifying unit 15 includes a multiplier 60, an inverse Fourier transform unit 61, a digital-analog conversion unit 62, and a power amplifier 63.

While synchronizing band specifying information for specifying the frequency band amplified by the amplifying unit 15 with the symbol of each sub-carrier, the band specifying unit 44 may output the band specifying information to the amplifying unit 15 as a coefficient that is multiplied by the symbol of each sub-carrier output from the Fourier transform unit 14. The band specifying information may include a coefficient of non-zero as a coefficient for the symbol of each sub-carrier corresponding to the amplified frequency band and zero as a coefficient for other symbols. The multiplier 60 multiplies the symbol of each sub-carrier output from the Fourier transform unit 14 and the band specifying information.

The inverse Fourier transform unit 61 converts an operation result of the multiplier 60 into the OFDMA signal by the inverse Fourier transform. The digital-analog conversion unit 62 converts the OFDMA signal output from the inverse Fourier transform unit 61 into the analog signal. The power amplifier 63 amplifies the analog-format OFDMA signal converted by the digital-analog conversion unit 62 and outputs the analog-format OFDMA signal to the duplexer 16.

The operation result of the multiplier 60 includes only the symbol of the sub-carrier corresponding to the frequency band specified by the band specifying unit 44, and other symbols are masked. Accordingly, the power amplifier 63 amplifies only the radio signal that is transmitted in the frequency band specified by the band specifying unit 44.

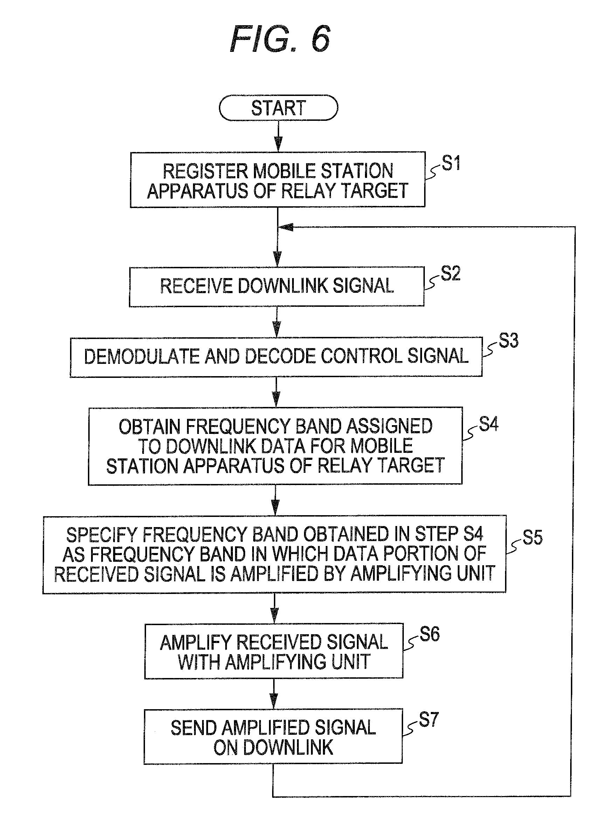

FIG. 6 is a flowchart illustrating an operation of the radio relay station apparatus 1 of FIG. 1. In Step S1, the identification information registering unit 24 obtains the identification information on the mobile station apparatus (BS) located within the range capable of communicating with the radio relay station apparatus 1 from the random access channel on the uplink. The identification information registering unit 24 registers the obtained identification information as the identification information on the mobile station apparatus (BS) of the relay target in the identification information database 25.

In Step S2, the radio relay station apparatus 1 receives the signal on the downlink. In Step S3, the control signal obtaining unit 40, demodulator 41, and decoder 42 of the radio resource specifying unit 26 demodulate and decode the control signal included in the signal received in Step S2. For the frame format of FIG. 4, the control signal obtaining unit 40, the demodulator 41, and the decoder 42 demodulate and decode the control signal portion 50.

In Step S4, the radio resource assignment information obtaining unit 43 obtains the frequency band assigned to the mobile station apparatus (UE) registered in the identification information database 25, from the decoded control signal. For example, when the frame format of FIG. 4 is used, the radio resource assignment information obtaining unit 43 may obtain the identification information on the mobile station apparatus, which is included in the decoded control information on the common control channel (CCH). The radio resource assignment information obtaining unit 43 compares the identification information obtained from the control information and the identification information registered in the identification information database 25. When one of the pieces of identification information obtained from the control information is matched with the identification information registered in the identification information database 25, the radio resource assignment information obtaining unit 43 obtains the band information from the control information on the dedicated control channel for the mobile station apparatus (UE) in the identification information.

In Step S5, the band specifying unit 44 specifies the frequency band used in the transmission of the identification information as the frequency band that should be amplified by the amplifying unit 15 in the period during which the identification information is set on the downlink. The band specifying unit 44 specifies the frequency band identified by the radio resource assignment information obtaining unit 43 as the frequency band that should be amplified by the amplifying unit 15 in the period during which the data is sent on the downlink in the frequency band assigned to each mobile station apparatus (UE).

In Step S6, the amplifying unit 15 amplifies the frequency band specified by the band specifying unit 44 in the received signal. In Step S7, the radio relay station apparatus 1 sends the amplified radio signal on the downlink. Then the radio relay station apparatus 1 returns the processing to Step S2.

According to the first embodiment, only the frequency band used in the data for the mobile station apparatus (UE) registered as the relay target in the identification information database 25 is amplified in the signal of the data portion 51 of the sub-frame on the downlink of FIG. 4, so that power consumption can be reduced in the power amplifier 63. According to the first embodiment, only the frequency band used in the data for the mobile station apparatus (UE) registered in the identification information database 25 is amplified, so that the amplification of the unnecessary band can be eliminated to reduce the generation of the interference between the mobile station apparatuses (UE). Further, the demodulation processing and the decoding processing need not be performed on the data portion 51, so that the processing delay can be reduced.

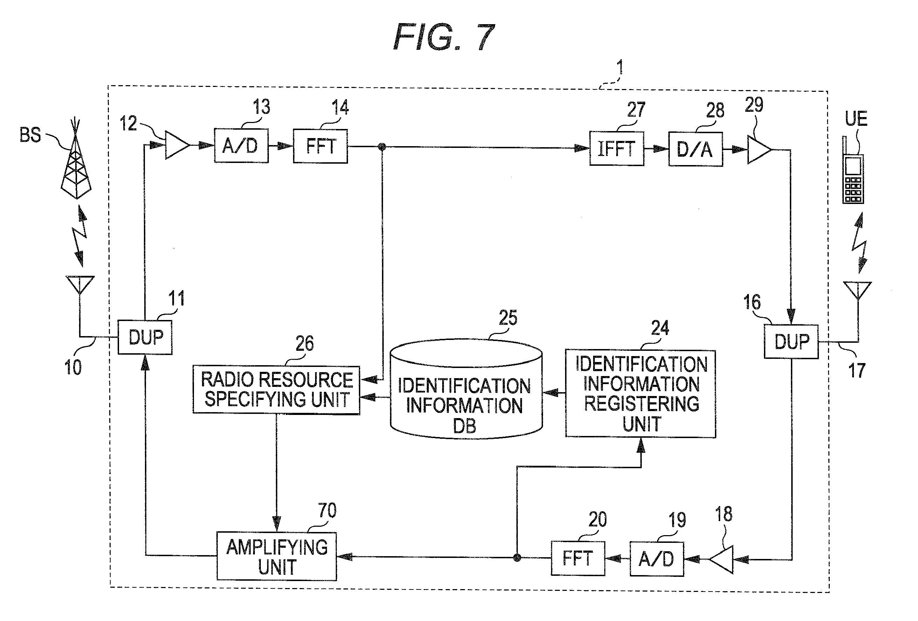

FIG. 7 is an overall view illustrating a configuration of a radio relay station apparatus according to a second embodiment of the invention. In the radio relay station apparatus 1 of the second embodiment, only the data that is sent from the mobile station apparatus (UE) registered in the identification information database 25 is relayed in the pieces of data sent on the uplink from the mobile station apparatuses (UE). In FIG. 2, the components similar to those of FIG. 1 are designated by the same reference numerals, and the descriptions are not repeated.

The radio relay station apparatus 1 includes an inverse Fourier transform unit 27, a digital-analog conversion unit 28, and a power amplifier 29. The radio relay station apparatus 1 includes an amplifying unit 70. In the signal relay on the downlink, the inverse Fourier transform unit 27 converts the symbol of each sub-carrier output from the Fourier transform unit 14 into the OFDMA signal by the inverse Fourier transform. The digital-analog conversion unit 28 converts the OFDMA signal output from the inverse Fourier transform unit 27 into the analog signal. The power amplifier 29 amplifies the analog format OFDMA signal converted by the digital-analog conversion unit 28. The antenna 17 sends the OFDMA signal, supplied through the duplexer 16 and amplified by the power amplifier 29, to the mobile station apparatus (UE).

At the time where the signal is sent from the mobile station apparatus (UE) registered in the identification information database 25, the radio resource specifying unit 26 specifies the frequency band used in the transmission of the uplink signal from the mobile station apparatus (UE) as the frequency band that should be amplified by the amplifying unit 70.

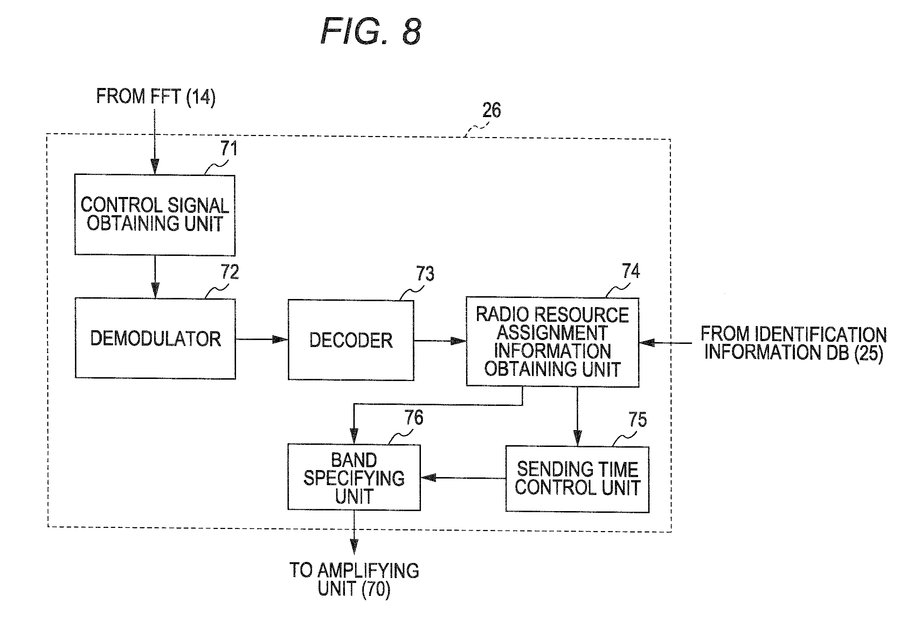

FIG. 8 illustrates an example of a configuration of the radio resource specifying unit 26 of FIG. 7. The radio resource specifying unit 26 includes a control signal obtaining unit 71, a demodulator 72, a decoder 73, a radio resource assignment information obtaining unit 74, a sending time control unit 75, and a band specifying unit 76. The control signal obtaining unit 71 obtains the control signal that sent on the downlink from the base station apparatus (BS) to the mobile station apparatus (UE). The demodulator 72 demodulates the control signal obtained by the control signal obtaining unit 71, and the decoder 73 decodes the control signal.

The radio resource assignment information obtaining unit 74 obtains sending permission information, in which the base station apparatus (BS) permits each mobile station apparatus (UE) to send the signal on the uplink, from the decoded control signal. The sending permission information includes time information for indicating a time the base station apparatus (BS) permits each mobile station apparatus (UE) to send the signal on the uplink and frequency band information on the frequency band used to send the signal. For example, in LTE, a UL grant signal may be used as the sending permission information.

The radio resource assignment information obtaining unit 74 reads the identification information on the mobile station apparatus, which is registered as the mobile station apparatus relayed by the radio relay station apparatus 1, from the identification information database 25. The radio resource assignment information obtaining unit 74 compares the identification information included in the decoded control signal and the identification information on the mobile station apparatus (BS) registered in the identification information database 25. When the identification information included in the control signal is matched with the identification information registered in the identification information database 25, the radio resource assignment information obtaining unit 74 obtains the sending permission information that is stored in the control signal while correlated with the identification information. The radio resource assignment information obtaining unit 74 identifies the time each mobile station apparatus (UE) registered in the identification information database 25 is permitted to send the signal and the frequency band information on the frequency band used to send the signal according to the sending permission information.

The sending time control unit 75 controls a time the band specifying unit 76 outputs the band specifying information to the amplifying unit 70 according to the sending time identified by the radio resource assignment information obtaining unit 74. The band specifying unit 76 outputs the band specifying information for specifying the band amplified by the amplifying unit 70 to the amplifying unit 70 in the sending time identified by the radio resource assignment information obtaining unit 74. The amplifying unit 70 is similar to the amplifying unit of FIG. 5, and the amplifying unit 70 amplifies the signal in the frequency band specified by the band specifying unit 76 in the OFDMA signal that is converted into the signal expressing the symbol of each sub-carrier by the Fourier transform unit 20.

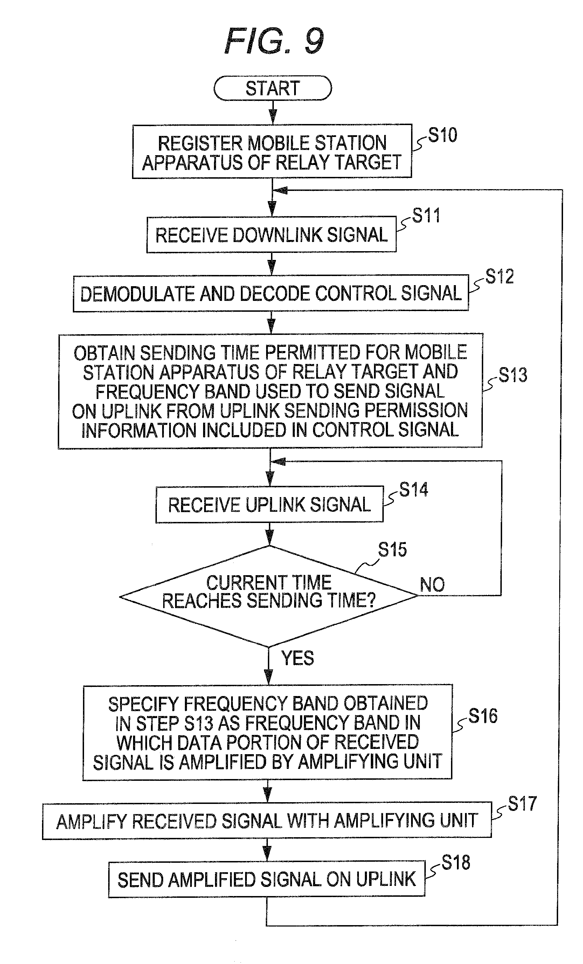

FIG. 9 is a flowchart illustrating an operation of the radio relay station apparatus 1 of FIG. 7. In Step S10, the identification information registering unit 24 registers the identification information on the mobile station apparatus (BS) located within the range capable of communicating with the radio relay station apparatus 1 in the identification information database 25. In Step S11, the radio relay station apparatus 1 receives the signal on the downlink. In Step S12, the control signal obtaining unit 71, demodulator 72, and decoder 73 of the radio resource specifying unit 26 demodulates and decodes the control signal included in the signal received in Step S2.

In Step S13, the radio resource assignment information obtaining unit 74 obtains the sending permission information on the mobile station apparatus (UE) registered in the identification information database 25 from the decoded control signal. The radio resource assignment information obtaining unit 74 identifies the time each mobile station apparatus (UE) registered in the identification information database 25 is permitted to send the signal and the frequency band information on the frequency band used to send the signal according to the sending permission information.

In Step S14, the radio relay station apparatus 1 receives the signal on the uplink. In Step S15, the sending time control unit 15 determines whether the current time reaches the sending time identified by the radio resource assignment information obtaining unit 74. The processing returns to Step S14 when the current time does not reach the sending time (N in Step S15), and the processing goes to Step S16 when the current time reaches the sending permission time (Y in Step S15).

In Step S16, the band specifying unit 76 outputs the band specifying information for specifying the frequency band identified in Step S13 to the amplifying unit 70 in the sending time identified by the radio resource assignment information obtaining unit 74. In Step S17, the amplifying unit 70 amplifies the frequency band specified by the band specifying unit 76 in the received signal. In Step S18, the radio relay station apparatus 1 sends the amplified radio signal on the uplink. Then the radio relay station apparatus 1 returns the processing to Step S11.

According to the second embodiment, only the signal concerning the data, registered as the relay target in the identification information database 25 and sent from the mobile station apparatus (UE), is amplified in the data sent from each mobile station apparatus (UE) on the uplink, so that power consumption can be reduced. According to the second embodiment, only the frequency band used in the data from the mobile station apparatus (UE) registered as the relay target is amplified, so that the amplification of the unnecessary band can be eliminated to reduce the generation of the interference between the mobile station apparatuses (UE). According to the second embodiment, the demodulation processing and the decoding processing are not performed on the data sent from each mobile station apparatus (UE), so that the processing delay can be reduced. The radio relay station apparatus 1 of FIG. 7 includes the components similar to those of the radio relay station apparatus of FIG. 1, whereby the radio relay station apparatus 1 of FIG. 7 may relay only the data sent to the mobile station apparatus (UE) registered in the identification information database 25 in the pieces of data on the downlink like the radio relay station apparatus of FIG. 1.

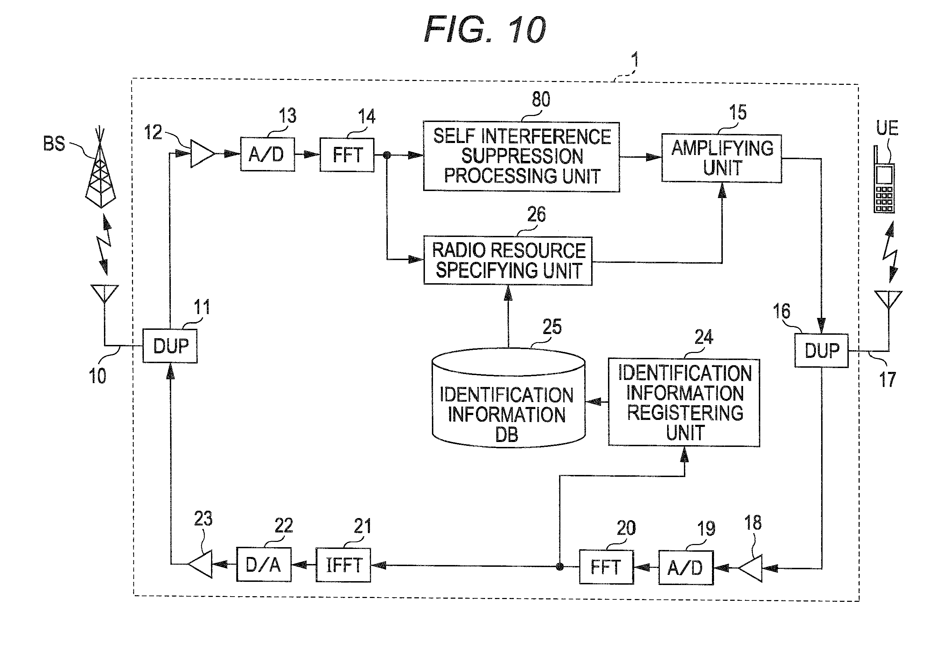

FIG. 10 is an overall view illustrating a configuration of a radio relay station apparatus according to a third embodiment of the invention. The radio relay station apparatus 1 of the third embodiment includes a self interference suppression processing unit 80 as a downlink signal processing circuit. The self interference suppression processing unit 80 suppresses self interference in the received downlink signal. In FIG. 10, the components similar to those of FIG. 1 are designated by the same reference numerals, and the descriptions are not repeated. The self interference suppression processing unit 80 delays a time necessary for the loop of the signal component sent from the antenna 17 in a receiving circuit, and the self interference suppression processing unit 80 removes the delayed signal component from the received signal. The operation result of the multiplier 60 of FIG. 5 may be used in the interference suppression processing.

As described above, the radio relay station apparatus 1 relays only the data sent to the mobile station apparatus (UE) of the relay target in the pieces of data transmitted on the downlink, thereby reducing the interference between the mobile station apparatus (UE). According to the third embodiment, the self interference of the sending signal in the target mobile station apparatus (UE) is reduced to further improve the signal quality. The similar self interference suppression processing unit may be provided in the uplink signal processing circuit according to the second embodiment of FIG. 7.

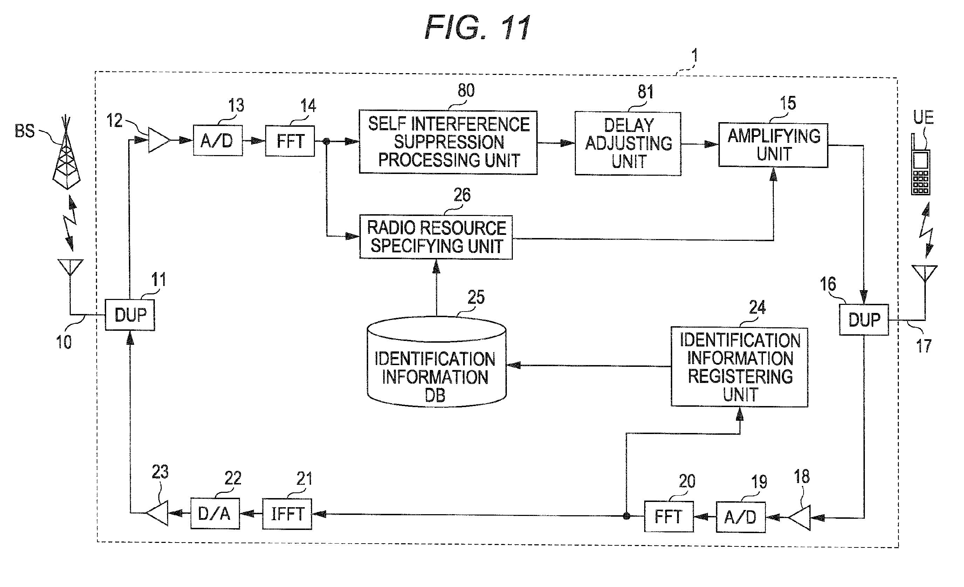

FIG. 11 is an overall view illustrating a configuration of a radio relay station apparatus according to a fourth embodiment of the invention. The radio relay station apparatus 1 of the fourth embodiment includes a delay adjusting unit 81. In FIG. 11, the components similar to those of FIG. 10 are designated by the same reference numerals, and the descriptions are not repeated. The delay adjusting unit 81 delays the received signal input to the amplifying unit 15 for the time the radio resource specifying unit 26 demodulates, and decodes the control signal on the downlink to specify the frequency band to be amplified, and the delay adjusting unit 81 absorbs the delay of the frequency band specification with respect to the received signal input to the amplifying unit 15. According to the fourth embodiment of the invention, the delay of the frequency band specification generated in actually mounting the radio resource specifying unit 26 is absorbed.

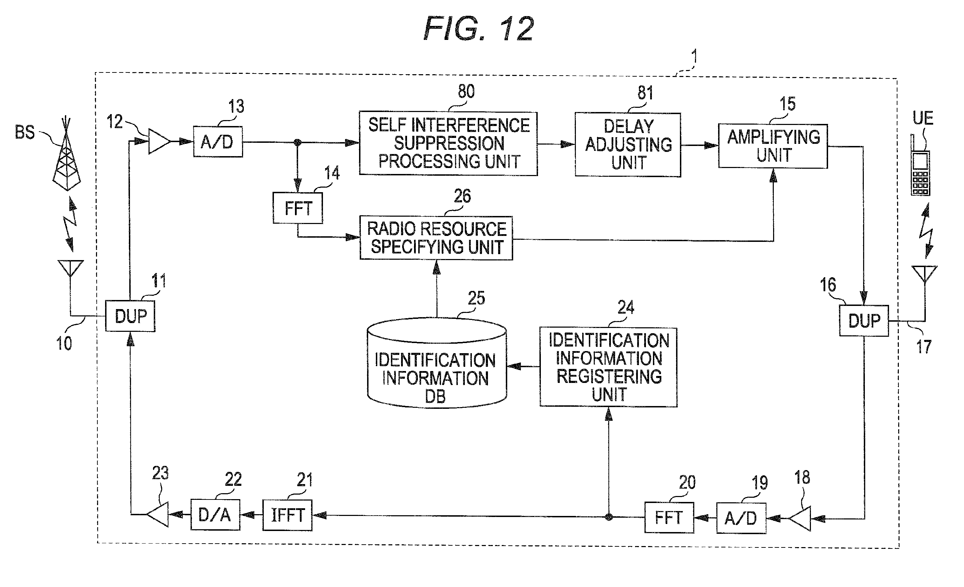

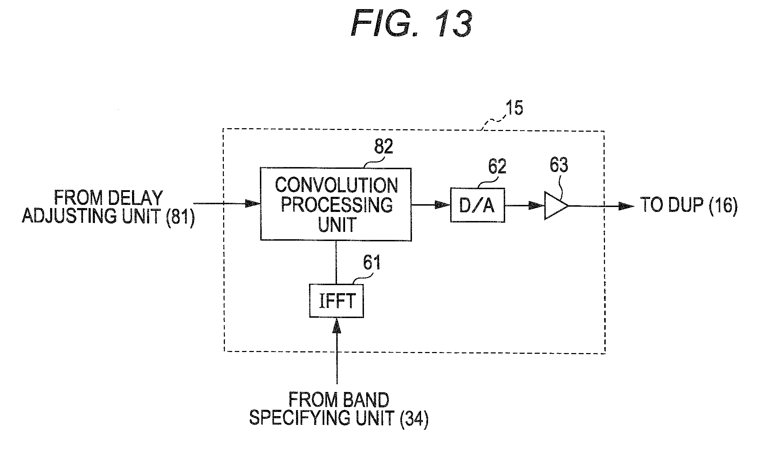

FIG. 12 is an overall view illustrating a configuration of a radio relay station apparatus according to a fifth embodiment of the invention. In FIG. 12, the components similar to those of FIG. 11 are designated by the same reference numerals, and the descriptions are not repeated. In the fifth embodiment, the self interference suppression processing unit 80 performs self interference processing on the OFDMA signal of a time-domain signal output from the analog-digital conversion unit 13. The amplifying unit 15 amplifies the OFDMA signal converted into the digital-format signal while the OFDMA signal is kept the time-domain signal. The OFDMA signal is the RF signal converted into the digital-format signal by the analog-digital conversion unit 13. FIG. 13 illustrates an example of a configuration of the amplifying unit 15 of FIG. 12.

The amplifying unit 15 includes an inverse Fourier transform unit 61, a digital-analog conversion unit 62, a power amplifier 63, and a convolution processing unit 82. The inverse Fourier transform unit 61 converts the band specifying information output from the band specifying unit 44 into the time-domain signal by the inverse Fourier transform. The convolution processing unit 82 performs filtering processing for passing the received signal in the specified band by performing convolution operation between the received signal of the time-domain signal output from the delay adjusting unit 81 and the time-domain signal output from the inverse Fourier transform unit 61. The digital-analog conversion unit 62 converts an output signal of the convolution processing unit 82 into an analog signal. The power amplifier 63 amplifies the analog-format OFDMA signal converted by the digital-analog conversion unit 62, and the power amplifier 63 outputs the amplified OFDMA signal to the duplexer 16.

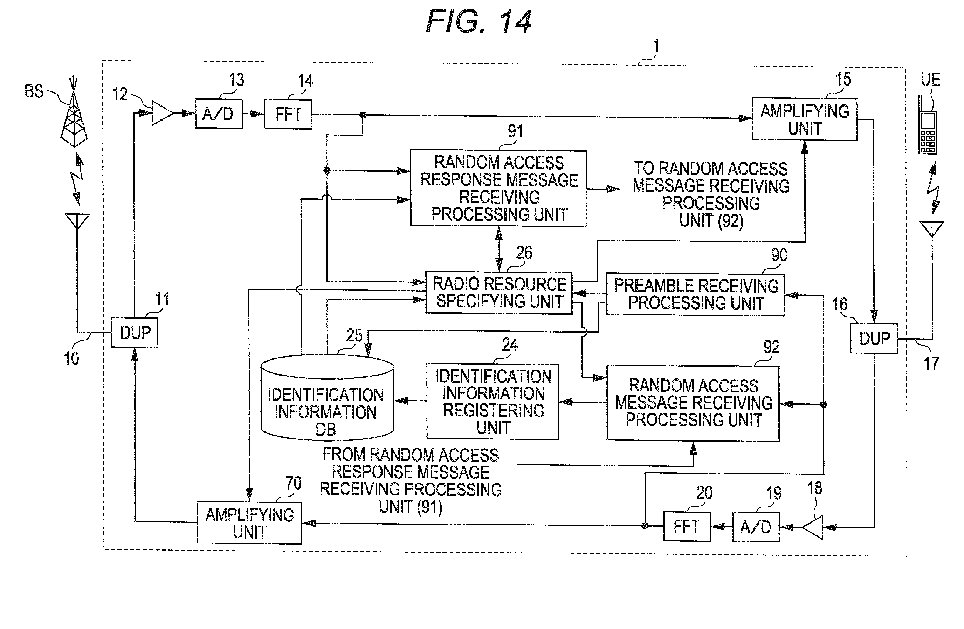

FIG. 14 is an overall view illustrating a configuration of a radio relay station apparatus according to a sixth embodiment of the invention. In FIG. 14, the components similar to those of FIGS. 1 and 7 are designated by the same reference numerals, and the descriptions are not repeated. In a communication system in which the radio relay station apparatus 1 of the sixth embodiment is used, the mobile station apparatus (UE) sends a preamble signal when the connection to the base station apparatus (BS) is started. The base station apparatus (BS) sends a random access response message for the preamble signal. When receiving the random access response message, the mobile station apparatus (UE) sends the random access message including an identification number thereof.

When receiving the preamble signal, the radio relay station apparatus 1 tentatively registers the mobile station apparatus (UE) that sends the preamble signal. When the mobile station apparatus (UE) sends the random access message, the radio relay station apparatus 1 obtains the identification number of the mobile station apparatus (UE), which is included in the random access message, and the radio relay station apparatus 1 registers the identification number of the mobile station apparatus (UE) in the identification information database 25. The radio relay station apparatus 1 includes a preamble receiving processing unit 90, a random access response message receiving processing unit 91, and a random access message receiving processing unit 92.

The preamble receiving processing unit 90 detects the preamble signal that is transmitted on the uplink from the mobile station apparatus (UE). When detecting the preamble signal, the preamble receiving processing unit 90 registers a preamble pattern included in the preamble signal as the information for identifying the tentatively-registered mobile station apparatus (UE) in the identification information database 25. The preamble receiving processing unit 90 notifies the radio resource specifying unit 26 of the preamble pattern.

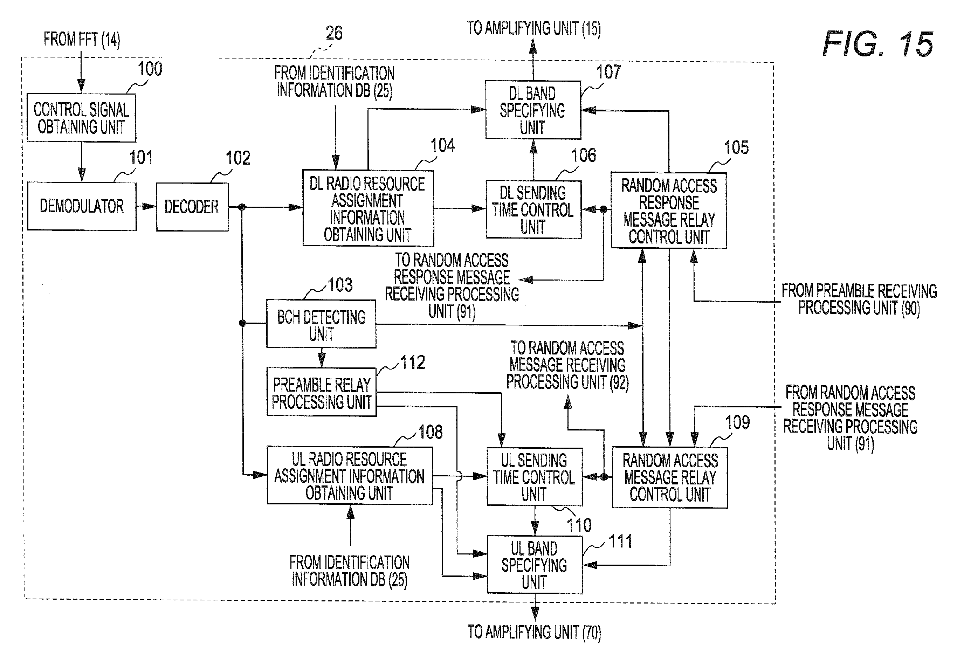

FIG. 15 illustrates an example of a configuration of the radio resource specifying unit 26 of FIG. 14. The radio resource specifying unit 26 includes a control signal obtaining unit 100, a demodulator 101, a decoder 102, and a broadcast channel (BCH) detecting unit 103.

The radio resource specifying unit 26 includes a DL radio resource assignment information obtaining unit 104, a random access response message relay control unit 105, a DL sending time control unit 106, and a DL band specifying unit 107. The radio resource specifying unit 26 includes a UL radio resource assignment information obtaining unit 108, a random access message relay control unit 109, a UL sending time control unit 110, a UL band specifying unit 111, and a preamble relay processing unit 112.

The control signal obtaining unit 100 obtains the control signal that is sent on the downlink from the base station apparatus (BS) to the mobile station apparatus (UE). The demodulator 101 demodulates the control signal obtained by the control signal obtaining unit 100, and the decoder 102 decodes the control signal.

The broadcast channel detecting unit 103 detects broadcast information included in the decoded control signal. The broadcast information includes a sending time the mobile station apparatus (UE) is permitted to send the preamble signal and information on the frequency band. The broadcast channel detecting unit 103 supplies the sending time the mobile station apparatus (UE) is permitted to send the preamble signal and information on the frequency band to the preamble relay processing unit 112.

The broadcast information includes information for indicating an interval T1 from the time the base station apparatus (BS) receives the preamble signal until transmitting the random access response message in response to the preamble signal. The broadcast information includes information for indicating an interval T2 from the time the random access response message is received until the mobile station apparatus (UE) should send the random access message. The broadcast channel detecting unit 103 supplies the information for indicating an interval T1 from the time the base station apparatus (BS) receives the preamble signal until transmitting the random access response message in response to the preamble signal to the random access response message control unit 105. The broadcast channel detecting unit 103 supplies the information for indicating an interval T2 from the time the random access response message is received until the mobile station apparatus (UE) should send the random access message to the random access message control unit 109.

As with the radio resource assignment information obtaining unit 43 of FIG. 3, the DL radio resource assignment information obtaining unit 104 obtains the frequency band assigned to the mobile station apparatus (BS) registered in the identification information database 25 from the control signal decoded by the decoder 102. As with the band specifying unit 44 of FIG. 3, the band specifying unit 107 specifies the frequency band identified by the DL radio resource assignment information obtaining unit 104 and the frequency band used in the transmission of the identification information as the frequency band that should be amplified by the amplifying unit 15.

When receiving the preamble pattern from the preamble receiving processing unit 90, the random access response message relay control unit 105 determines the time the random access response message arrives based on the time information for indicating the time interval T1, which is supplied from the broadcast channel detecting unit 103, and the random access response message relay control unit 105 notifies the DL sending time control unit 106, the random access response message receiving processing unit 91, and the random access message relay control unit 109 of the determined time. In relaying the random access response message, the random access response message relay control unit 105 controls the DL band specifying unit 107 such that all the frequency bands used on the downlink are specified as the band amplified by the amplifying unit 15.

According to the sending time specified by the random access response message relay control unit 105, the DL sending time control unit 106 controls the time the DL band specifying unit 107 outputs the band specifying information to the amplifying unit 15 in relaying the random access response message. With control by the DL sending time control unit 106, the DL band specifying unit 107 outputs the band specifying information for specifying all the frequency bands used on the downlink to the amplifying unit 15 in the sending time specified by the random access response message relay control unit 105.

According to the band specifying information by the DL band specifying unit 107, the amplifying unit 15 amplifies the random access response message by amplifying all the frequency bands used on the downlink in the sending time of the random access response message.

As with the radio resource assignment information obtaining unit 74 of FIG. 8, the UL radio resource assignment information obtaining unit 108 obtains the sending permission information on the mobile station apparatus (UE) registered in the identification information database 25. As with the sending time control unit 75 of FIG. 8, the UL sending time control unit 110 controls the time the UL band specifying unit 111 outputs the band specifying information to the amplifying unit 70 according to the sending time identified by the UL radio resource assignment information obtaining unit 108. The UL band specifying unit 111 outputs the band specifying information for specifying the band that should be amplified to the amplifying unit 70 in the sending time identified by the UL radio resource assignment information obtaining unit 108.

The preamble relay processing unit 112 supplies the information for indicating the sending time in which the sending of the preamble signal is permitted, which is specified in the broadcast information, to the UL sending time control unit 110. In relaying the preamble signal, the preamble relay processing unit 112 controls the UL band specifying unit 111 such that the frequency band in which the sending of the preamble signal is permitted is specified as the band amplified by the amplifying unit 70.

According to the sending time specified by the preamble relay processing unit 112, the UL sending time control unit 110 controls the UL band specifying unit 111 such that the UL band specifying unit 111 outputs the band specifying information to the amplifying unit 70 in the time the preamble signal can be sent. The UL band specifying unit 111 outputs the band specifying information for specifying the frequency band in which the sending of the preamble signal is permitted to the amplifying unit 70 in the preamble signal sending time specified by the broadcast information.

The amplifying unit 70 amplifies the frequency band used in the transmission of the preamble signal on the uplink according to the band specifying information by the UL band specifying unit 111.

The random access message relay control unit 109 determines the time the random access message arrives from the mobile station apparatus (UE) based on the time the random access response message supplied from the random access response message relay control unit 105 arrives and the time information for indicating the time interval T2, which is supplied from the broadcast channel detecting unit 103. From the random access response message receiving processing unit 91, the random access message relay control unit 109 may obtain the information for indicating the sending time the random access message is sent.

To the UL sending time control unit 110 and the random access message receiving processing unit 92, the random access message relay control unit 109 supplies the information for indicating the time the random access message is sent. In relaying the random access message, the random access message relay control unit 109 controls the UL band specifying unit 111 such that all the frequency bands used on the uplink are specified as the band amplified by the amplifying unit 15.

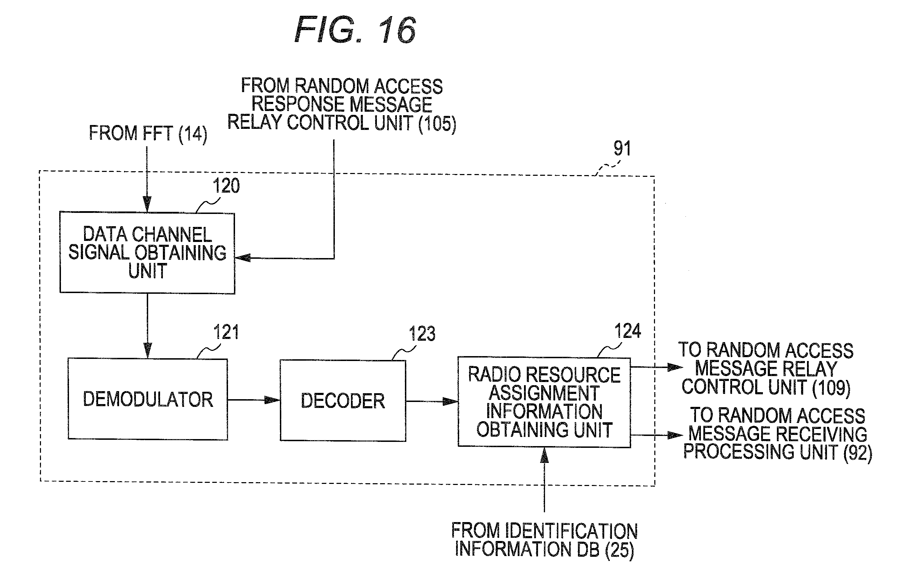

FIG. 16 illustrates an example of a configuration of the random access response message receiving processing unit 91 of FIG. 14. The random access response message sent from the base station apparatus (BS) to the mobile station apparatus (UE) includes information for specifying the frequency band in which the mobile station apparatus (UE) sends the random access message in response to the random access response message. The random access response message may include information for specifying the time the random access message is sent.

The random access response message receiving processing unit 91 includes a data channel signal obtaining unit 120, a demodulator 121, a decoder 123, and a radio resource assignment information obtaining unit 124. In the time it takes for the random access response message supplied from the random access response message relay control unit 105 to arrive, the data channel signal obtaining unit 120 obtains the data channel signal sent on the downlink from the base station apparatus (BS) to the mobile station apparatus (UE). The demodulator 121 modulates the data channel signal obtained by the data channel signal obtaining unit 120, and the decoder 123 decodes the data channel signal. The radio resource assignment information obtaining unit 124 obtains the information for specifying the frequency band used to send the random access message from the random access response message included in the decoded data channel signal.

The radio resource assignment information obtaining unit 124 supplies the information for specifying the frequency band used to send the random access message to the random access message receiving processing unit 92. The radio resource assignment information obtaining unit 124 may obtain the information for specifying the random access message sending time from the random access response message. The radio resource assignment information obtaining unit 124 may supply the information for specifying the random access message sending time to the random access message relay control unit 109.

Referring to FIG. 15, according to the sending time specified by the random access message relay control unit 109, the UL sending time control unit 110 controls the time the UL band specifying unit 111 outputs the band specifying information to the amplifying unit 70 in relaying the random access message. Under the control of the UL sending time control unit 110, the UL band specifying unit 111 outputs the band specifying information for specifying all the frequency bands used on the uplink to the amplifying unit 70 in the sending time specified by the random access message relay control unit 109.

According to the band specifying information by the UL band specifying unit 111, the amplifying unit 70 amplifies the random access message by amplifying all the frequency bands used on the uplink in the random access message sending time.

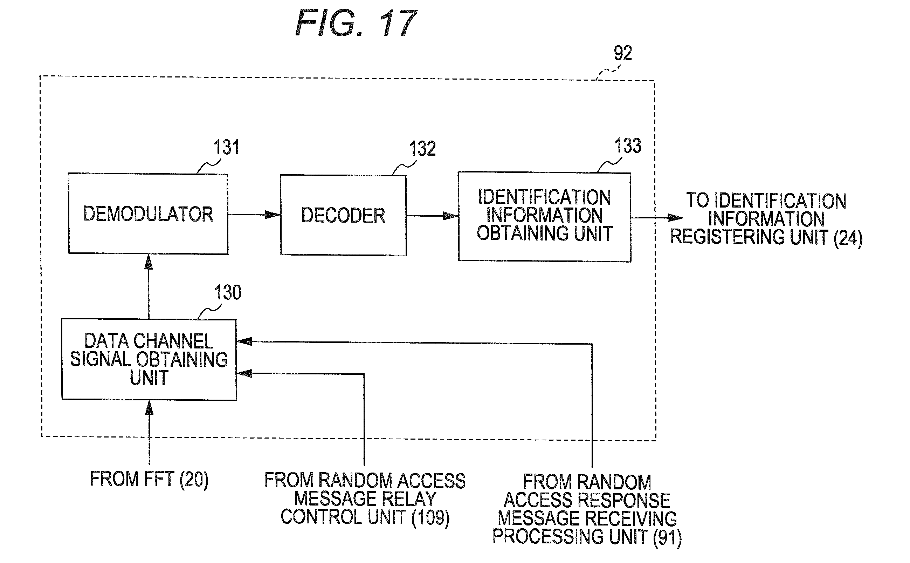

FIG. 17 illustrates an example of a configuration of the random access message receiving processing unit 92 of FIG. 14. The random access message receiving processing unit 92 includes a data channel signal obtaining unit 130, a demodulator 131, a decoder 132, and an identification information obtaining unit 133. The data channel signal obtaining unit 130 obtains the information for specifying the frequency band used to send the random access message from the random access response message receiving processing unit 91.

The data channel signal obtaining unit 130 obtains the sent data channel signal in the time the random access message supplied from the random access message relay control unit 109 arrives in the specified frequency band. The demodulator 131 demodulates the data channel signal obtained by the data channel signal obtaining unit 130, and the decoder 132 decodes the data channel signal. The identification information obtaining unit 133 obtains the identification information on the mobile station apparatus (UE) that sends the random access message from the random access message included in the decoded data channel signal, and the identification information obtaining unit 133 supplies the identification information to the identification information registering unit 24.

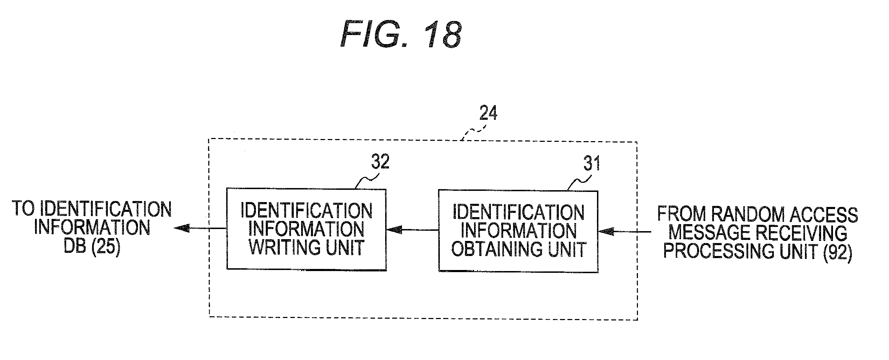

FIG. 18 illustrates an example of a configuration of the identification information registering unit 24 of FIG. 14. The identification information registering unit 24 includes an identification information obtaining unit 31 and an identification information writing unit 32. The identification information obtaining unit 31 obtains the identification information from the random access message receiving processing unit 92. The identification information writing unit 32 writes the identification information obtained by the identification information obtaining unit 31 as the identification information on the mobile station apparatus whose communication with the base station apparatus (BS) is relayed by the radio relay station apparatus 1 in the identification information database 25. The identification information writing unit 32 erases the tentative registration of the mobile station apparatus (UE) registered by the preamble receiving processing unit 90.

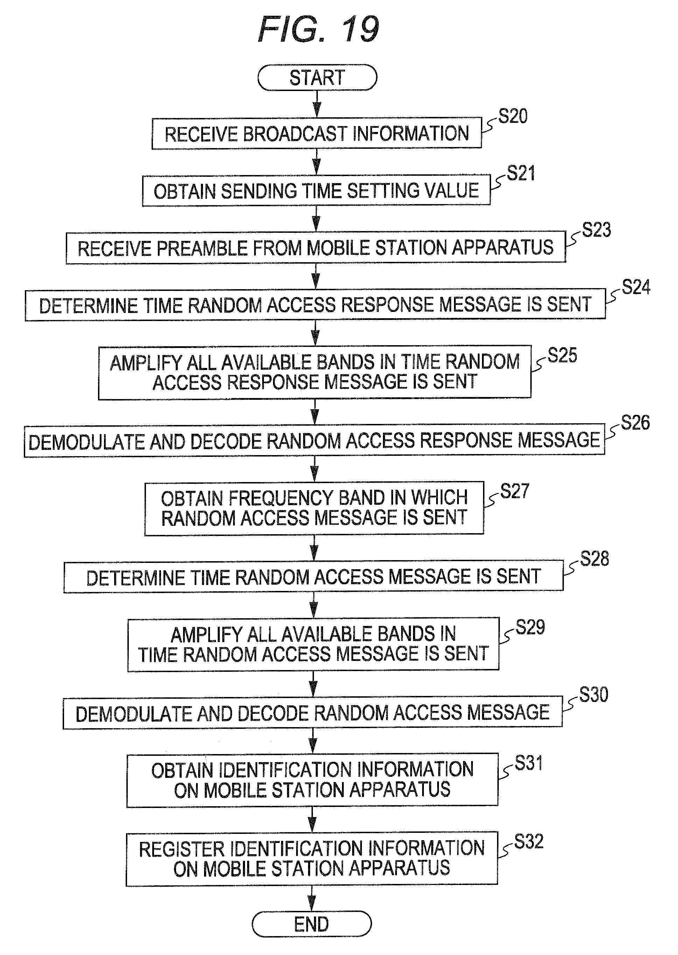

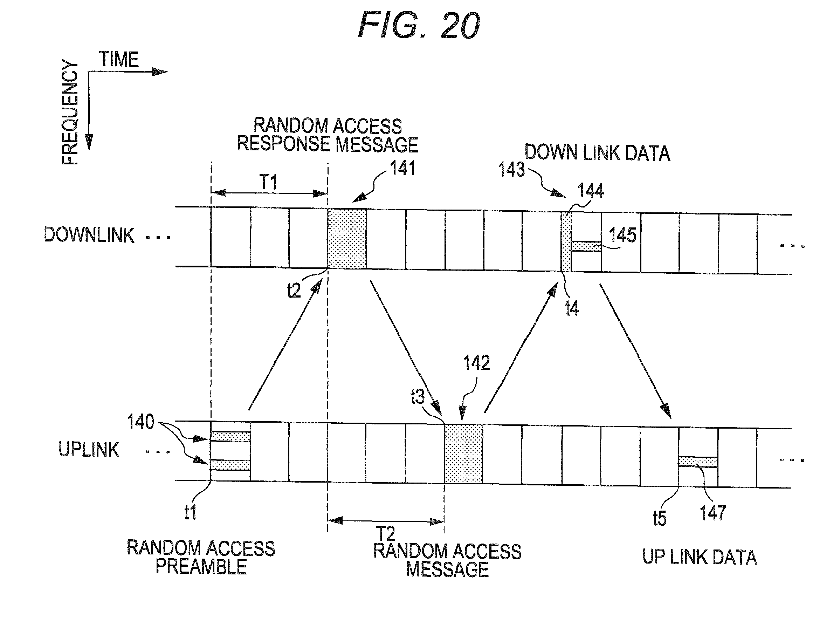

FIG. 19 is a flowchart illustrating an example of identification information obtaining processing of the mobile station apparatus, and FIG. 20 illustrates an example of the identification information obtaining processing of the mobile station apparatus. In Step S20, when the radio relay station apparatus 1 receives the broadcast information, the broadcast channel detecting unit 103 detects the broadcast information.

In Step S21, the broadcast channel detecting unit 103 supplies the sending time in which the sending of the preamble signal is permitted and the information on the frequency band to the preamble relay processing unit 112. The broadcast information includes the sending time in which the sending of the preamble signal is permitted and the information on the frequency band. The broadcast channel detecting unit 103 supplies the interval T1 from the time the base station apparatus (BS) receives the preamble signal until sending the random access response message to the random access response message control unit 105. The broadcast information includes the interval T1. The broadcast channel detecting unit 103 supplies the interval T2 from the time the mobile station apparatus (UE) receives the random access response message until sending the random access message to the random access message control unit 109. The broadcast information includes the interval T2.

In Step S23, the radio relay station apparatus 1 receives the preamble signal. In FIG. 20, a time t1 expresses the time the preamble signal is received. At this point, the preamble relay processing unit 112, the UL sending time control unit 110, and the UL band specifying unit 111 controls the amplifying unit 70 such that the signal on the uplink is amplified in the sending time in which the sending of the preamble signal is permitted and a frequency band 140.

In Step S24, the random access response message relay control unit 105 determines a time t2 the random access response message arrives based on the time information for indicating the time interval T1 supplied from the broadcast channel detecting unit 103. In Step S25, the random access response message relay control unit 105, the DL sending time control unit 106, and the DL band specifying unit 107 amplify the radio signals in all the bands used on the downlink in a sub-frame 141 in which the random access response message is sent.

In Step S26, the random access response message receiving processing unit 91 demodulates and decodes the random access response message received by the radio relay station apparatus 1. In Step S27, the radio resource assignment information obtaining unit 124 of the random access response message receiving processing unit 91 obtains the information for specifying the frequency band used to send the random access message.

In the random access response message, when the information for specifying the sending time of the random access message is imparted, the radio resource assignment information obtaining unit 124 may obtain the information for specifying the sending time of the random access message. In Step S28, the random access message relay control unit 109 determines a time t3 the random access message arrives based on the sending time of the random access response message and the time information for indicating the time interval T2 supplied from the broadcast channel detecting unit 103. Alternatively, the random access message relay control unit 109 may use a random access message sending time t3 imparted in the random access response message.

In Step S29, the random access message relay control unit 109, the UL sending time control unit 110, and the DL band specifying unit 111 amplify the radio signals of all the bands used on the uplink in the sub-frame 142 in which the random access message is sent. In Step S30, the random access message receiving processing unit 92 demodulates and decodes the random access message received by the radio relay station apparatus 1. In Step S31, the identification information obtaining unit 133 of the random access message receiving processing unit 92 obtains the identification information of the mobile station apparatus (UE). The random access message includes the identification information of the mobile station apparatus (UE). In Step S32, the identification information registering unit 24 registers the obtained identification information as the identification information of the mobile station apparatus (UE) that should be relayed by the radio relay station apparatus 1 in the identification information database 25.

Then, as with the radio relay station apparatus 1 of FIG. 1, the radio relay station apparatus 1 of the sixth embodiment relays a control signal 144 and data 145, which are included in a sub-frame 143 on the downlink at a time t4. As with the radio relay station apparatus 1 of FIG. 7, the radio relay station apparatus 1 of the sixth embodiment relays data 147 on the uplink at a time t5 according to the sending permission information included in the control signal 144 of the sub-frame 143.

According to the six embodiment, the radio relay station apparatus 1 can be used in a system in which the identification information on the mobile station apparatus UE is imparted in the random access message.

In the radio relay station apparatus, the processing delay may be suppressed because only the control channel information is referred to in order to learn the radio resource assigned to the mobile station apparatus. In the radio relay station apparatus, because the radio resource assigned to the target mobile station apparatus is relayed, the necessity to relay unnecessary signals that are not the relay target may be eliminated, and the power consumption may be reduced to improve the frequency use efficiency.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention(s) has(have) been described in detail, it should be understood that the various changes, substitutions, and alterations could be made hereto without departing from the spirit and scope of the invention.
In any of the above aspects, the various features may be implemented in hardware, or as software modules running on one or more processors. Features of one aspect may be applied to any of the other aspects.
The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A radio relay station apparatus that relays a radio signal between a base station apparatus and a mobile station apparatus, the radio relay station apparatus comprising:
a mobile station storage unit in which an identifier of the mobile station apparatus;
a radio resource specifying unit that specifies a radio resource assigned to the mobile station apparatus, which is a radio resource in which a radio signal that should be amplified is transmitted, the radio resource assigned to the mobile station apparatus being indicated by control channel information sent from the base station apparatus;
a receiving unit that receives the radio signal between the base station apparatus and the mobile station apparatus;
an amplifying unit that amplifies the signal received by the receiving unit, the signal received by the receiving unit being transmitted on the radio resource specified by the radio resource specifying unit; and
a sending unit that sends the signal amplified by the amplifying unit in a form of the radio signal.

2. The radio relay station apparatus according to claim 1,
wherein the control channel information includes radio resource assignment information for indicating a frequency band assigned to the mobile station apparatus on a downlink, and
the radio resource specifying unit specifies the frequency band assigned to the mobile station apparatus as the radio resource in which the radio signal that should be amplified is transmitted.

3. The radio relay station apparatus according to claim 1,
wherein the control channel information includes radio resource assignment information for indicating a sending time and a frequency band, which are assigned to the mobile station apparatus on an uplink, and
the radio resource specifying unit specifies the sending time and frequency band, which are assigned to the mobile station apparatus, as the radio resource in which the radio signal that should be amplified is transmitted.

4. The radio relay station apparatus according to any one of claims 1 to 3,
wherein an interval from a time a preamble signal is sent from the mobile station apparatus to the base station apparatus until a response message is sent from the base station apparatus in response to the preamble signal is specified by broadcast information previously sent from the base station apparatus,
an interval from a time the response message is sent until the mobile station apparatus sends a random access message in response to the response message is specified by the broadcast information,
a frequency band in which the sending of the random access message is permitted is specified in the response message,
the radio relay station apparatus includes an identification information obtaining unit, which obtains the identification information of the mobile station apparatus that sends the preamble signal from the random access message, the sending time of the random access message being determined by the response message sending time and the broadcast information, a sending frequency band of the random access message being determined in the response message, and
the identification information of the mobile station apparatus obtained by the identification information obtaining unit is stored as the identifier of the mobile station apparatus.

5. The radio relay station apparatus according to any one of claims 1 to 4, comprising a self interference suppression unit that performs self interference suppression processing for suppressing the sending signal from the sending unit, the received signal received by the receiving unit including the sending signal from the sending unit.

6. The radio relay station apparatus according to claim 5, wherein the self interference suppression unit performs the self interference suppression processing on a time-domain signal of the received signal.

7. The radio relay station apparatus according to claim 2, comprising a delay absorbing unit that absorbs a delay of the time the radio resource specifying unit specifies the radio resource with respect to the time the received signal received by the receiving unit is input to the amplifying unit.

8. A radio relay method for relaying a radio signal in a radio relay station apparatus that relays the radio signal between a base station apparatus and a mobile station apparatus, the radio relay method comprising;
storing an identifier of the mobile station apparatus;
specifying a radio resource assigned to the mobile station apparatus, which is a radio resource in which a radio signal that should be amplified is transmitted, the radio resource assigned to the mobile station apparatus being indicated by control channel information sent from the base station apparatus;
receiving the radio signal between the base station apparatus and the mobile station apparatus;
amplifying the received signal, the received signal being transmitted on the radio resource specified as the radio resource in which the radio signal that should be amplified is transmitted; and
sending the amplified signal in a form of the radio signal.

9. The radio relay method according to claim 8,
wherein the control channel information includes radio resource assignment information for indicating a frequency band assigned to the mobile station apparatus on a downlink, and
the frequency band assigned to the mobile station apparatus is specified as the radio resource in which the radio signal that should be amplified is transmitted.

10. The radio relay method according to claim 8,
wherein the control channel information includes radio resource assignment information for indicating a sending time and a frequency band, which are assigned to the mobile station apparatus on an uplink, and
the sending time and frequency band, which are assigned to the mobile station apparatus, are specified as the radio resource in which the radio signal that should be amplified is transmitted.

11. The radio relay method according to any one of claims 8 to 10,
wherein an interval from a time a preamble signal is sent from the mobile station apparatus to the base station apparatus until a time response message is sent from the base station apparatus in response to the preamble signal is specified by broadcast information previously sent from the base station apparatus,
an interval from a time the response message is sent until the mobile station apparatus sends a random access message in response to the response message is specified by the broadcast information,
a frequency band in which the sending of the random access message is permitted is specified in the response message,
identification information of the mobile station apparatus that sends the preamble signal is obtained from the random access message, the sending time of the random access message being determined by the response message sending time and the broadcast information, a sending frequency band of the random access message being determined in the response message, and
the obtained identification information of the mobile station apparatus is stored as the identifier of the mobile station apparatus that should be relayed.

12. A radio communication system comprising:
a base station apparatus;
a mobile station apparatus;
a radio relay station apparatus that relays a radio signal between the base station apparatus and the mobile station apparatus,
wherein the radio relay station apparatus stores an identifier of the mobile station apparatus,
specifies a radio resource assigned to the mobile station apparatus, which is a radio resource in which a radio signal that should be amplified is transmitted, the radio resource assigned to the mobile station apparatus being indicated by control channel information sent from the base station apparatus,
receives the radio signal between the base station apparatus and the mobile station apparatus,
amplifies the received signal, the received signal being transmitted on the radio resource specified as the radio resource in which the radio signal that should be amplified is transmitted, and
sends the amplified signal in a form of the radio signal.

13. A computer program which, when executed on a computing device, causes the device to carry out a method according to any of claims 8 to 11.
